# EUROPÄISCHE PATENTSCHRIFT

(11) **EP 3 181 847 B1**
(45) Veröffentlichungstag und Bekanntmachung des Hinweises auf die Patenterteilung: **20.03.2019**
(21) Anmeldenummer: 16002112.7
(22) Anmeldetag: 30.09.2016
(51) Int. Cl.: F01N 3/20

(54) **HITZERESISTENTE REDUKTIONSMITTELEINSPRITZDÜSE**
HEAT RESISTANT REDUCING AGENT INJECTION NOZZLE
INJECTEUR DE RÉDUCTEUR THERMORÉSISTANT

(30) Priorität: 16.12.2015 DE 102015016244
(43) Veröffentlichungstag der Anmeldung: 21.06.2017
(73) Patentinhaber: Albonair GmbH, 44263 Dortmund (DE)
(72) Erfinder: Bown, Hywel, 46286 Dorsten (DE); Schaika, Volker, 44137 Dortmund (DE)
(74) Vertreter: Patentanwaltskanzlei Methling

(56) Entgegenhaltungen:
- WO-A2-2008/040363
- DE-A1-102006 061 730
- DE-A1-102013 007 380
- DE-C1- 19 856 366
- US-A1- 2014 363 357

## Beschreibung

Die Erfindung betrifft eine Einspritzdüse zur Einspritzung eines Reduktionsmittels in den Abgasstrom eines Verbrennungsmotors zur selektiven katalytischen Reduktion, insbesondere zur Zerstäubung des Reduktionsmittels mittels Druckluft oder Treibgas, wobei die Einspritzdüse einen Düsenkörper und einen Düsenkopf umfasst und wobei eine Reduktionsmittelleitung In dem Düsenkörper angeordnet und mit dem Düsenkopf verbunden ist.

Weiter betrifft die Erfindung ein Reduktionsmitteldosiersystem zur Einspritzung eines Reduktionsmittels in den Abgasstrom eines Verbrennungsmotors zur selektiven katalytischen Reduktion mit zumindest einer Förderpumpe, mittels derer Reduktionsmittel aus einem Reduktionsmitteltank über eine Saugleitung aus dem Tank angesaugt, über zumindest eine Druckleitung gefördert und über zumindest eine Düse in den Abgasstrom des Verbrennungsmotors eingeleitet wird, wobei das Dosiersystem eine Druckluftversorgung aufweist und das Reduktionsmittel mittels Druckluft außerhalb der Düse zerstäubt wird

Derartige Einspritzdüsen sind bekannt und kommen zum Einsatz in Dosiersystemen zur Einspritzung eines Reduktionsmittels, wie beispielsweise einer Harnstofflösung in den Abgasstrom einer Verbrennungskraftmaschine zur selektiven katalytischen Reduktion, insbesondere einer Hamstofflösung gemäß DIN 70070.

Die Begriffe Reduktionsmitteldosiersystem bzw. Dosiersystem werden im Sinne der Erfindung synonym verwendet. Mit dem Begriff der Reduktionsmittellösung oder des Reduktionsmittels Ist jedes zur selektiven katalytischen Reduktion geeignete Reduktionsmittel umfasst, vorzugsweise kommt hierzu eine Hamstofflösung gemäß DIN 70070 zum Einsatz. Die Erfindung ist jedoch nicht hierauf beschränkt.

Katalysatoren zur selektiven katalytischen Reduktion, sogenannte SCR-Katalysatoren (englisch: selective catalyic reduction, abgekürzt: SCR) werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel in das Abgassystem mit einer Dosiervorrichtung eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil Insbesondere gemäß DIN 70070 eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im Wesentlichen Zeit (Verdampfungs- und Reaktionszeit), Temperatur und Tröpfchengröße der eingedüsten Hamstofflösung. In diesen SCR-Katalysatoren wird durch selektive katalytische Reduktion (englisch: selective catalyic reduction, SCR) der Ausstoß von Stickoxyden um etwa 90 % reduziert.

Da ein Abgasstrom eines Verbrennungsmotors Temperaturen von bis zu mehreren Hundert Grad Celsius, insbesondere 450°C oder mehr) erreichen kann, und da eine Einspritzdüse zur Einspritzung eines Reduktionsmittels in den Abgasstrom in diesen zumindest mit dem Düsenkopf und dem sich daran anschließenden Teil des Düsenkörpers hineinragt, kommt es zu einer Erwärmung der Einspritzdüse. Über Wärmestrahlung oder Wärmeübertragung durch Kontakt oder Konvektion kann es weiterhin zu einer Übertragung der Wärme auf die Reduktionsmittelführenden Elemente, wie beispielsweise eine durch den Düsenkörper zu dem Düsenkopf geführte Reduktionsmittelleitung, und somit auch einer Erwärmung des Reduktionsmittels kommen.

Der Düsenkörper und die in diesem geführte Reduktionsmittelleitung können erheblichen Temperaturschwankungen unterworfen sein und somit über ihre Länge gesehen einen hohen Temperaturgradienten aufweisen. Dies kann zu Wärmespannungen in der Einspritzdüse führen. Insbesondere kann es zu Spannungen an der Verbindung, insbesondere einer Schweißverbindung, zwischen der Reduktionsmittelleitung und dem Düsenkopf kommen, wenn sich die Wärmeausdehnung des Düsenkörpers von der Wärmeausdehnung der Reduktionsmittelleitung unterscheidet. Durch solche Wärmespannungen kann es zur Beschädigung und möglichem Ausfall der Einspritzdüse kommen.

Des Weiteren ist es wünschenswert, dass das Reduktionsmittel ausreichend kühl bleibt, sodass eine lokale Zersetzung der Harnstoff-Wasser-Lösung in Verbindung mit einer Kristallisation des gelösten Harnstoffs verhindert wird, die den Durchfluss der Harnstoffwasserlösung durch das Einspritzventil verringern und im Extremfall verhindern könnte, und sodass das Reduktionsmittel möglichst effizient eingedüst werden kann.

Es ist aus dem Stand der Technik bekannt, eine Einspritzdüse einer Flüssigkeit temperaturbeständig auszubilden. Eine derartige Einspritzdüse ist beispielsweise bekannt aus der EP 2 060 758 B1. Hier umgibt ein Isolationsmantel den Düsenkörper, sodass zwischen dem Isoliermantel und dem Düsenkörper ein Raum entsteht, der mit einem Isolationsmaterial gefüllt werden kann. Nachteilig ist hier, dass zusätzliche Bauteile zur Realisierung der Isolation des Düsenkörpers erforderlich sind, was den Montageaufwand und die Kosten erhöht.

Aus Dokument DE 198 56 366 C1 ist eine Dosiereinrichtung mit einem Einspritzventil bekannt, das von einem unmittelbar mit der Abgasleitung verbundenen, doppelwandigen Ventilaufnahmekörper umfasst ist und wobei eine Drucklufteinrichtung Druckluft in einen Luftspalt zwischen einer Außenwandung und einer Innenwandung des Ventilaufnahmekörpers zum Kühlen zumindest der abgasnahen Teile des Einspritzventils einbläst.

Aus Dokument DE 10 2006 061 730 A1 ist eine SCR-Injektionseinrichtung mit einem Injektor, einem Hülsenelement und einem Kühlkörper bekannt.

Aus Dokument WO 2008/040363 A2 ist eine Düse zur Zerstäubung eines Fluids mit die Düse isolierenden Elementen und die Düse kühlenden und/oder wärmenden Elementen bekannt.

Aus Dokument US 2014/0363357 A1 ist ein Verfahren zum Betrieb einer Düse bekannt.

Aus Dokument DE 10 2013 007 380 A1 ist eine Abgasanlage mit einer Einbringvorrichtung zum Einbringen eines Reduktionsmittels in eine Abgasleitung bekannt.

Die Aufgabe der Erfindung ist es daher, eine Einspritzdüse der eingangs genannten Art derart weiter zu bilden, dass eine Wärmeausdehnung der Einspritzdüse und eine Übertragung von Wärme und thermischer Spannung auf eine Reduktionsmittelleitung ohne zusätzliche Bauteile reduziert werden können.

Diese Aufgabe wird erfindungsgemäß durch eine außenmischende Einspritzdüse gemäß Anspruch 1 und ein Reduktionsmitteldosiersystem gemäß Anspruch 7 gelöst. Vorteilhafte Weiterbildungen der Erfindung sind in den abhängigen Ansprüchen angegeben.

Besonders vorteilhaft bei der außenmischenden Einspritzdüse zur Einspritzung eines Reduktionsmittels in den Abgasstrom eines Verbrennungsmotors zur selektiven katalytischen Reduktion, insbesondere zur Zerstäubung des Reduktionsmittels mittels Druckluft oder Treibgas, wobei die Einspritzdüse einen Düsenkörper und einen Düsenkopf umfasst, wobei eine Reduktionsmittelleitung in dem Düsenkörper angeordnet und mit dem Düsenkopf verbunden ist, ist es, dass der Düsenkörper zumindest einen Hitzeschild aufweist, der die Reduktionsmittelleitung zumindest teilweise thermisch isoliert.

Dadurch, dass der Düsenkörper zumindest einen Hitzeschild aufweist, der die Reduktionsmittelleitung zumindest teilweise thermisch isoliert, ist es möglich, eine Wärmeübertragung von dem Abgasstrom zu der Reduktionsmittelleitung über den Düsenkörper zu reduzieren. Der Hitzeschild dient somit der thermischen Isolation von Reduktionsmittelleitung und heißem Abgas in dem Abgasstrom des Verbrennungsmotors. Durch die Integration des zumindest einen Hitzeschilds in den Düsenkörper kann die thermische Ausdehnung des Düsenkörpers reduziert werden, was zu einer Verringerung der Wärmespannungen in der Einspritzdüse führt. Dabei wird die Übertragung von thermischer Spannung von dem Düsenkörper auf den Düsenkopf und die Reduktionsmittelleitung ebenfalls reduziert.

Vorzugsweise erstreckt sich der Hitzeschild über die gesamte Länge des Düsenkörpers oder im Wesentlichen über die gesamte Länge des Düsenkörpers, womit die Reduktionsmittelleitung vollständig auf ganzer Länge oder nahezu auf ganzer Länge isoliert wird. Alternativ erstreckt sich der Hitzeschild nur in einem vorderen, dem Düsenkopf nahen Bereich. Der vordere Bereich des Düsenkörpers ist jener Bereich, der in den Abgasstrom hineinragt. Beispielsweise kann der zumindest eine Hitzeschild bis zu 10% oder bis zu 20% oder bis zu 30% oder bis zu 40% oder bis zu 50% oder bis zu 60% oder bis zu 70% oder bis zu 80% oder bis zu 90 % der Länge des Düsenkörpers ausmachen. Die Ausführung des zumindest einen Hitzeschilds ist geometrisch variabel, beispielsweise in der Länge und dem Durchmesser, und kann somit der Einbausituation und den Umgebungsbedingungen wie dem Temperaturniveau und dem den Düsenkörper umgebenden Strömungsfeld im Abgastrakt angepasst werden.

Durch die Integration des zumindest einen Hitzeschilds in den Düsenkörper toleriert die Einspritzdüse gemäß einer bevorzugten Ausführungsform höhere Abgastemperaturen als aus dem Stand der Technik bekannte Einspritzdüsen. Demzufolge kann die Einspritzdüse tiefer in den Abgasstrom eines Verbrennungsmotors hineinragen, was wiederum zu einer verbesserten Mischung des Reduktionsmittels mit dem Abgas führt und die Effizienz des Reduktionsmittels erhöht. Außerdem kann durch die Reduzierung von thermischen Spannungen an der Reduktionsmittelleitung, und insbesondere an der Verbindungsstelle, beispielsweise einer Schweißnaht, der Reduktionsmittelleitung mit dem Düsenkopf, die Lebensdauer der Einspritzdüse erhöht werden.

In einer bevorzugten Ausführungsform wird der Hitzeschild von einer äußeren Wandung und einer inneren Wandung gebildet. Die innere Wandung ist vorzugsweise eine tragende Wandung, die starr mit dem Düsenkopf und dem Düsenkörper verbunden ist. Die äußere Wandung hingegen ist bevorzugt an einem ersten Ende starr mit dem Düsenkopf verbunden und an einem zweiten Ende frei beweglich gegenüber dem Düsenkörper angeordnet. Die Anordnung der äußeren Wandung kann alternativ auch umgekehrt ausgeführt sein, d.h. dass sie am zweiten Ende starr mit dem Düsenkörper verbunden sein kann und am ersten Ende frei beweglich angeordnet ist.

Dadurch, dass die äußere Wandung an einem Ende frei beweglich gegenüber dem Düsenkörper angeordnet ist, kann sie sich bei einer Erwärmung durch den Abgasstrom an dem freien Ende ungehindert ausdehnen, ohne dass dabei eine thermische Spannung in der Einspritzdüse erzeugt wird. Das heißt, bei der Erwärmung des Düsenkörpers in dem Abgasstrom wird von der äußeren Wandung keine thermische Spannung auf die innere Wandung und die Reduktionsmittelleitung übertragen.

In einer weiteren bevorzugten Ausführungsform ist die äußere Wandung in einem Abstand zu der inneren Wandung angeordnet, sodass in dem Hitzeschild zwischen der äußeren Wandung und der inneren Wandung ein Hohlraum gebildet wird, der mit Luft und/oder zusätzlich mit einem wärmeisolierenden Material gefüllt ist. Durch den mit Luft und/oder zusätzlich mit einem Isolationsmaterial gefüllten Hohlraum zwischen der äußeren Wandung und der inneren Wandung wird die Wärmeübertragung von der äußeren Wandung auf die innere Wandung reduziert.

Die Ausführung des zumindest einen Hitzeschilds ist geometrisch variabel. Beispielsweise kann der Abstand der äußeren Wandung zu der inneren Wandung verändert werden und somit das Volumen des isolierenden Hohlraumes.

In einer bevorzugten Ausführungsform ist der Hohlraum mit Luft gefüllt. Alternativ kann der Hohlraum mit einem Isolationsmaterial gefüllt sein, beispielsweise ein Keramikmaterial als Pulver oder Fasern.

Vorzugsweise weist vorzugsweise der Werkstoff der inneren Wandung einen möglichst geringeren thermischen Ausdehnungskoeffizienten auf. Der Werkstoff der äußeren Wandung kann durch die frei bewegliche Anordnung ein Material mit einem höheren thermischen Ausdehnungskoeffizienten sein. Es kann jedoch auch für die innere Wandung und die äußere Wandung derselbe Werkstoff zum Einsatz kommen.

In einer bevorzugten Ausführungsform bestehen die äußere Wandung und die innere Wandung aus zwei unterschiedlichen metallischen Werkstoffen. Dabei weist vorzugsweise der Werkstoff der inneren Wandung einen geringeren thermischen Ausdehnungskoeffizienten auf als der Werkstoff der äußeren Wandung.

Die äußere Wandung mit dem höheren thermischen Ausdehnungskoeffizienten ist an einem Ende freibeweglich gegenüber dem Düsenkörper angeordnet und kann sich somit bei der Erwärmung in dem Gasstrom ungehindert ausdehnen. Aufgrund des geringeren thermischen Ausdehnungskoeffizienten der inneren Wandung ist die thermische Ausdehnung dieser bei einer Erwärmung geringer als die der äußeren Wandung. Zudem wird durch den isolierenden Hohlraum zwischen der äußeren Wandung und der inneren Wandung diese weit weniger erwärmt als die äußere Wandung. Demzufolge kann durch die Integration der äußeren und inneren Wandung in den Düsenkörper die Wärmeausdehnung dieses reduziert werden. Eine geringere Wärmeausdehnung hat wiederum eine verringerte thermische Spannung in der Einspritzdüse und damit eine Reduzierung der Übertragung von thermischer Spannung von dem Düsenkörper auf die Reduktionsmittelleitung zur Folge.

In einer weiteren bevorzugten Ausführungsform ist die Reduktionsmittelleitung gebogen. Tritt durch die Wärmeausdehnung des Düsenkörpers in der Einspritzdüse eine thermische Spannung auf, kann diese von der gebogenen Reduktionsmittelleitung zumindest teilweise absorbiert werden. Die Biegung der Reduktionsmittelleitung passt sich automatisch den Spannungsbedingungen in der Einspritzdüse an.

Der Hitzeschild in Verbindung mit der gebogenen Reduktionsmittelleitung macht die Einspritzdüse unempfindlich gegenüber Veränderungen von Temperaturgradienten sowie gegenüber Veränderungen der Temperaturen des Reduktionsmittels und der Druckluft.

Gemäss der Erfindung bildet der Düsenkörper Im Inneren eine Druckluftkammer, wobei die in der Kammer befindliche Druckluft die durch die Kammer verlaufende Reduktionsmittelleitung umgibt. Da die Druckluft mit dem Düsenkörper, insbesondere der inneren Wandung des in den Düsenkörper integrierten Hitzeschilds, dem Düsenkopf und der Reduktionsmittelleitung in Kontakt kommt, werden diese von der in die Druckluftkammer einströmenden Druckluft gekühlt.

Gemäss der Erfindung weist der Düsenkörper an einem Ende einen Drucklufteinlass und einen Reduktionsmitteleinlass und an einem gegenüberliegenden Ende den Düsenkopf mit zumindest einer Reduktionsmittelaustrittsöffnung und zumindest einer Druckluftaustrittsöffnung auf. Die Reduktionsmittelleitung verbindet den Reduktionsmitteleinlass mit der Reduktionsmittelaustrittsöffnung und die zumindest eine Druckluftaustrittsöffnung steht mit der Druckluftkammer, und somit mit dem Inneren des Düsenkörpers, in Verbindung. Durch die Integration zumindest eines Hitzeschilds in den Düsenkörper kann die Übertragung einer durch die Wärmeausdehnung des Düsenkörpers verursachten thermischen Spannung auf die Reduktionsmittelleitung, und insbesondere auf die Verbindung der Reduktionsmittelleitung mit dem Düsenkopf, reduziert werden.

Die Reduktionsmittelaustrittsöffnung wird über den Reduktionsmitteleinlass und die Reduktionsmittelleitung mit dem zu zerstäubenden Reduktionsmittel gespeist. Die zumindest eine Druckluftaustrittsöffnung wird über den Drucklufteinlass und die Druckluftkammer mit Druckluft zum Zerstäuben des Reduktionsmittels gespeist. Die zumindest eine Druckluftaustrittsöffnung kann beispielsweise durch einen Ringspalt gebildet werden, der konzentrisch zu der Reduktionsmittelaustrittsöffnung angeordnet ist.

Bei der außenmischenden Zweistoffdüse tritt dabei vorzugsweise aus einem Auslass der Druckleitung Reduktionsmittel aus und aus einem Auslass einer Druckluftleitung Druckluft. Ein Auslass der Druckluftleitung ist vorzugsweise derart positioniert, dass mittels der aus dem Auslass der Druckluftleitung austretenden Druckluft das aus dem Auslass der Druckleitung austretende Reduktionsmittel außerhalb des Düsenkopfes unmittelbar zerstäubt wird. Durch die strömungsoptimierte Anordnung der Auslässe der Druckleitung und der Druckluftleitung wird die Aerosolbildung außerhalb der Düse unmittelbar im Abgasstrang des Verbrennungsmotors verbessert. Mithilfe eines Regelventils kann die Druckluft auf ein zur Zerstäubung des Reduktionsmittels mittels Druckluft gewünschtes Druckniveau eingestellt werden.

Besonders vorteilhaft bei dem Reduktionsmitteldosiersystem zur Einspritzung eines Reduktionsmittels in den Abgasstrom eines Verbrennungsmotors zur selektiven katalytischen Reduktion mit zumindest einer Förderpumpe, mittels derer Reduktionsmittel aus einem Reduktionsmitteltank über zumindest eine Saugleitung aus dem Tank angesaugt und über zumindest eine Druckleitung gefördert und über zumindest eine Düse in den Abgasstrom des Verbrennungsmotors eingeleitet wird, wobei das Dosiersystem eine Druckluftversorgung aufweist und das Reduktionsmittel mittels Druckluft außerhalb der Düse zerstäubt wird, ist es, dass es sich bei der Düse um eine erfindungsgemäße außenmischende Einspritzdüse handelt.

Durch die Integration einer thermischen Isolation in Form zumindest eines Hitzeschilds in den Körper der Einspritzdüse wird die Wärmeübertragung von dem Düsenkörper auf eine Reduktionsmittelleitung, die das Reduktionsmittel durch den Düsenkörper zu einem Düsenkopf führt und dazu mit diesem starr verbunden ist, reduziert. Des Weiteren wird durch eine entsprechende Materialauswahl der inneren Wandung des Düsenkörpers und die freie Beweglichkeit der äußeren Wandung gegenüber dem Düsenkörper die Ausbildung termischer Spannung in der Einspritzdüse reduziert, wie auch die Übertragung thermischer Spannung auf die Reduktionsmittelleitung. Des Weiteren kann die gebogene Reduktionsmittelleitung zumindest einen Teil der auftretenden thermischen Spannung absorbieren. Damit kann die Lebensdauer der Einspritzdüse und somit des Reduktionsmitteldosiersystems verlängert werden.

Das Reduktionsmitteldosiersystem kann ein Regelventil aufweisen. Mithilfe des Regelventils kann die Druckluft auf ein zur Zerstäubung des Reduktionsmittels mittels Druckluft gewünschtes Druckniveau eingestellt werden.

Als Förderpumpen können beispielsweise Magnetpumpen und insbesondere Inline-Pumpen eingesetzt werden. Bei der Inline-Pumpe handelt es sich um eine Sonderform der Kolbenpumpe in Form einer Doppelkolbenpumpe, bei der zwei Kolben in einer Hülse betrieben werden. Der mittels einer Spule magnetisch angetriebene Druckkolben fördert das durch den Saugstutzen in die Pumpe eingetretene Reduktionsmittel in einer Vorwärtsbewegung mittels Gegendruck eines Steuerkolbens über den Druckstutzen zur Düse. Eine solche Pumpe, bei welcher der Kolben mittels einer Spule magnetisch angetrieben wird, wird auch als Magnetkolbenpumpe bezeichnet. Jede Förderpumpe kann als Pumpeneinheit aufgebaut sein und zusätzlich weitere Bauteile, insbesondere Schaltventile und/oder Sensoren als integrale Bestandteile aufweisen.

Vorzugsweise weist das Dosiersystem zumindest einen Reduktionsmittelfilter auf. Hierdurch ist es gewährleistet, die Reduktionsmittellösung in der gewünschten Qualität und Reinheit bereitzustellen, um Verstopfungen von Leitungen oder der Düse vorzubeugen.

Vorzugsweise wird der Druck stromab der Förderpumpe mittels eines Drucksensors erfasst und überwacht. Durch eine derartige Erfassung und Überwachung des Druckes in der Reduktionsmittel führenden Druckleitung zur Düse können die korrekte Arbeitsweise der Förderpumpe und die Dosierung kontinuierlich überwacht werden. Des Weiteren ist es möglich, einen Temperatursensor zur Erfassung der Reduktionsmitteltemperatur und/oder einen Durchflusssensor in das Dosiersystem zu integrieren.

Das Dosiersystem kann weiterhin eine Druckluftversorgung mit einem Regelventil aufweisen, über das Druckluft in eine Druckluftleitung geleitet wird.

Vorzugsweise wird nach Abschalten des Dosiersystems Druckluft über das Regelventil in die Druckluftleitung und von dort über ein Absperrventil in die Druckleitung geleitet, um das sich in der Druckleitung befindliche Reduktionsmittel auszublasen. Das Absperrventil verhindert vorzugsweise den Eintritt des Reduktionsmittels in die Druckluftleitung. Das Absperrventil kann vorzugsweise als ein Magnetventil und/oder ein Rückschlagventil ausgeführt sein. Durch Schaltung eines solchen Magnetventils und/oder Beaufschlagung eines mit einem Rückschlagventil ausgestalteten Druckluftanschlusses des Dosiersystems kann das Dosiersystem inklusive der Reduktionsmittel führenden Leitungen und der Düse nach Beendigung der Dosierung mittels Druckluft gespült werden, um Ablagerungen und Verstopfungen beispielsweise durch ein Einfrieren oder Auskristallisieren der Reduktionsmittellösung vorzubeugen. Hierdurch kann Frostschäden und Verstopfungen effektiv vorgebeugt werden.

Das Regelventil ist vorzugsweise ein gesteuertes Ventil zur Regelung der Druckluftversorgung des Dosiersystems. Das Regelventil dient der Steuerung, d. h. der Ein- und Abschaltung der Druckluftversorgung für das gesamte oder einen Teil des Dosiersystems. Das Regelventil kann dabei im Rahmen einer Steuerung angesteuert werden. Es besteht auch die Möglichkeit, dieses Ventil zur Regelung der Druckluft im Rahmen eines offenen oder geschlossenen Regelkreises zu regeln.

Mit dem Terminus der Regelung der Druckluft ist dabei insbesondere umfasst, die Dauer der Druckluftzufuhr und/oder die Taktung einer gepulsten Druckluftzufuhr und/oder den Massenstrom der Druckluftzufuhr und/oder den Druck der Druckluft zu steuern oder zu regeln.

Die benötigte Druckluft kann mittels eines Kompressors, insbesondere mittels eines geregelten Kompressors, bereitgestellt werden. Alternativ oder kumulativ kann die Druckluft von einer fahrzeugseitig bereitgestellten Druckluftversorgung in das Dosiersystem gespeist werden. Durch die Anordnung eines Schaltventils und/oder eines Druckregelventils und/oder eines insbesondere geregelten Kompressors kann der benötigte Druckluftmassenstrom sowie der benötigte Luftdruck eingeregelt und bereitgestellt werden. Vorzugsweise wird die Druckluft über einen Luftfilter geleitet. Hierdurch kann die gewünschte Reinheit und Partikelfreiheit der Druckluft gewährleistet werden.

Weiterhin kann die Druckluft dazu verwendet werden, das aus der Druckleitung austretende Reduktionsmittel außerhalb der Düse zu zerstäuben. Die Druckluft kann somit kumulativ zur Zerstäubung des Reduktionsmittels im Abgasstrang und zur Reinigung der Reduktionsmittel führenden Leitungen nach Beendigung der Dosierung genutzt werden.

Dadurch, dass die Zerstäubung des Reduktionsmittels außerhalb der Düse mittels der Druckluft erfolgen kann, kann auf die Anordnung einer Mischkammer verzichtet werden, wie dies bei vielen aus dem Stand der Technik bekannten Reduktionsmitteldosiersystemen zur Einspritzung eines Reduktionsmittels in den Abgasstrom eines Verbrennungsmotors zur selektiven katalytischen Reduktion bekannt ist. Durch den möglichen Verzicht auf eine derartige Mischkammer wird der benötigte Einbauraum für das erfindungsgemäße Reduktionsmitteldosiersystem weiter optimiert.

Vorzugsweise kann das Dosiersystem ein integriertes Steuergerät, beispielsweise einen CanBus-Anschluss, aufweisen. Durch die Integration eines Steuergerätes in das Dosiersystem kann die für die Steuerung und den Betrieb des Dosiersystems benötigte Elektronik integriert werden. Ein CanBus-Anschluss ermöglicht auf einfache Weise eine Einbindung des Dosiersystems in ein Steuersystem eines Kraftfahrzeuges und somit eine Einbindung in die Onbord-Diagnose des Kraftfahrzeugs.

Vorzugsweise kann ein NOₓ-Sensor im Abgasstrang stromab der Reduktionsmitteleinspritzung vorgesehen sein. Mittels eines derartigen NOₓ-Sensors im Abgasstrang stromab der Reduktionsmitteleinspritzung kann die Qualität der selektiven katalytischen Reduktion überwacht werden und insbesondere kann der Messwert dieses NOₓ-Sensors zur Ansteuerung des Dosiersystems und zur Regelung des zeitlichen Verlaufs der Dosiermenge verwendet werden. Dies bedeutet, dass mittels eines solchen NOₓ-Sensors im Abgasstrang stromab der Reduktionsmitteleinspritzung ein geschlossener Regelkreis zur Regelung des gesamten Dosiersystems realisiert werden kann.

In einer weiteren bevorzugten Ausführungsform kann das Dosiersystem einen Qualitätssensor zur Überwachung der Reduktionsmittellösung aufweisen. Mittels eines derartigen Qualitätssensors kann überwacht werden, dass tatsächlich Reduktionsmittellösung in dem Tank befindlich ist und mittels des Dosiersystems gefördert wird, und nicht etwa pures Wasser oder dergleichen. Ein solcher Qualitätssensor kann darauf basieren, dass der elektrische Widerstand der geförderten Flüssigkeit gemessen wird. Alternativ oder kumulativ kann eine Messung der Schallgeschwindigkeit innerhalb der geförderten Flüssigkeit erfolgen. Ein solcher Qualitätssensor kann insbesondere in dem Tank angeordnet sein, in welchem die Reduktionsmittellösung bevorratet wird.

Ein Ausführungsbeispiel der Erfindung ist in den Figuren dargestellt und wird nachfolgend näher erläutert. Es zeigen:
- Fig. 1: eine schematische Darstellung eines Reduktionsmitteldosiersystems;
- Fig. 2: eine schematische Darstellung einer Einspritzdüse zur Verwendung in dem Reduktionsmitteldosiersystem;
- Fig. 3: eine Detailvergrößerung des Düsenskopfes der Einspritzdüse nach Fig. 2.

In den Figuren sind identische Bauteile mit identischen Bezugszeichen versehen.

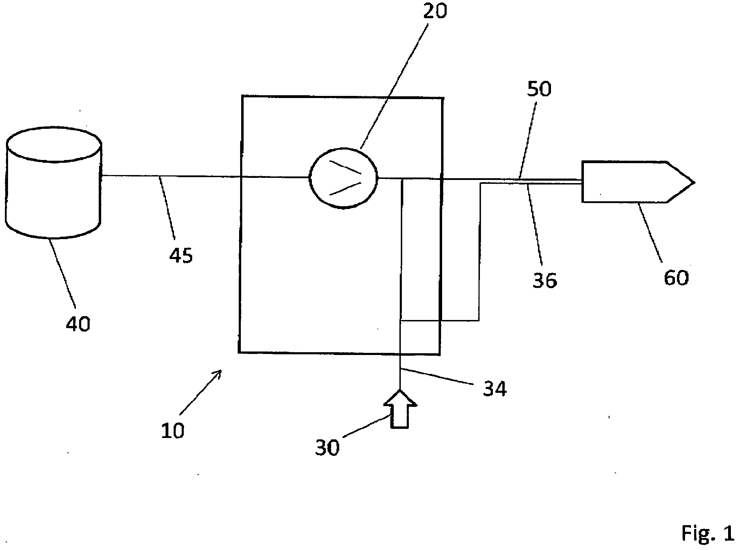

Fig. 1 zeigt eine schematische Darstellung eines Reduktionsmitteldosiersystems 10 zur Einspritzung eines Reduktionsmittels in den Abgasstrom eines nicht dargestellten Verbrennungsmotors zur selektiven katalytischen Reduktion. Mittels einer Förderpumpe 20 wird über eine Saugleitung 45 ein Reduktionsmittel aus einem Tank 40 angesaugt und über eine Druckleitung 50 zu einer Einspritzdüse 60 gefördert. Über die Einspritzdüse 60 wird das Reduktionsmittel in den Abgasstrom des Verbrennungsmotors eingespritzt. Ferner weist das Reduktionsmitteldosiersystem 10 einen Druckluftanschluss 30 auf, über den Druckluft zur Reinigung der Reduktionsmittel führenden Leitungen und Elemente nach Beendigung der Dosierung und zur Aerosolbildung bereitgestellt wird. Die Reinigung der Reduktionsmittel führenden Leitungen und Elemente nach Beendigung der Dosierung erfolgt mittels der über eine erste Druckluftleitung 34 geförderten Druckluft. Die Aerosolbildung erfolgt außerhalb der Düse 60 mittels der über eine zweite Druckluftleitung 36 geförderten Druckluft. Die Darstellung der Verbindungsleitungen ist rein schematisch.

Bei der Düse 60 handelt es sich um eine außenmischende Zweistoffdüse 60. Die Aerosolbildung erfolgt dabei dadurch, dass über zumindest eine erste Düsenöffnung einer solchen Zweistoffdüse 60 das über die Druckleitung 50 zugeführte Reduktionsmittel in den Abgastrakt eingespritzt wird. Über eine oder mehrere zweite Düsenöffnungen der Düse 60 wird die über die Druckluftleitung 36 zugeführte Druckluft ebenfalls in den Abgastrakt eingeleitet, sodass das Reduktionsmittel außerhalb der Düse 60 mittels Druckluft zerstäubt wird. Durch die Aerosolbildung außerhalb der Düsen 60 kann somit auf die Anordnung von Mischkammern verzichtet werden.

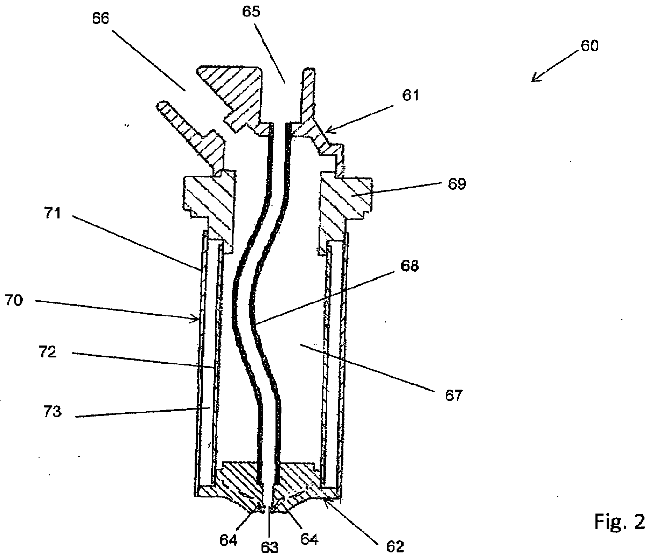

Fig. 2 zeigt einen Schnitt einer Einspritzdüse 60 des in Fig. 1 gezeigten Reduktionsmitteldosiersystem 10. Die Einspritzdüse 60 ist eine außenmischende Einspritzdüse zur Einspritzung eines Reduktionsmittels in den Abgasstrom eines Verbrennungsmotors zur selektiven katalytischen Reduktion, wobei die Zerstäubung des Reduktionsmittels mittels Druckluft außerhalb der Düse erfolgt.

Die Einspritzdüse 60 umfasst einen Düsenkörper 61 und einen Düsenkopf 62, der an einem Ende des Düsenkörpers 61 angeordnet und mit diesem verbunden ist. Der Düsenkopf 62 weist eine Reduktionsmittelaustrittsöffnung 63 und in dem dargestellten Ausführungsbeispiel eine Druckluftaustrittsöffnung 64 in Form eines Ringspaltes auf.

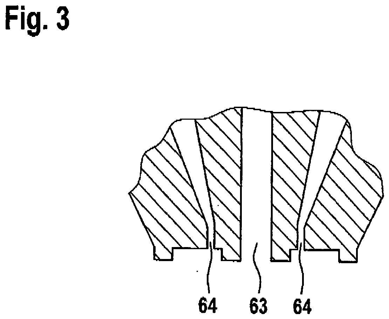

In Figur 3 ist eine Detailvergrößerung des Düsenkopfes 62 mit der Reduktionsmittelaustrittsöffnung 63 und der ringspaltförmigen Druckluftaustrittsöffnung 64 dargestellt. Erkennbar Ist der parallele Verlauf der Strömungskanäle der Reduktionsmittelaustrittsöffnung 63 und der Druckluftaustrittsöffnung 64 zur Außenseite des Düsenkopfes 62 hin. Die Druckluftaustrittsöffnung 64 umgibt die Reduktionsmittelaustrittsöffnung 63 ringförmig.

In nicht dargestellten Alternativen kann die Düse eine oder mehrere Reduktionsmittelaustrittsöffnungen 63 sowie eine oder mehrere Druckluftaustrittsöffnungen 64 aufweisen. Die eine oder mehrere Reduktionsmittelaustrittsöffnungen 63 sowie die eine oder mehrere Druckluftaustrittsöffnungen 64 können dabei derart zueinander positioniert und unter einem Winkel angestellt sein, dass das austretende Reduktionsmittel außerhalb des Düsenkopfes 62 unmittelbar durch die Druckluft zerstäubt und ein ausreichend feines Aerosol ausgebildet wird.

An einem gegenüberliegenden Ende des Düsenkörpers 61 sind ein Reduktionsmitteleinlass 65 und ein Drucklufteinlass 66 angeordnet. Der Düsenkörper 61 bildet im Inneren eine Druckluftkammer 67, die mit dem Drucklufteinlass 66 in Verbindung steht. Druckluft wird von der Druckluftleitung 36 über den Drucklufteinlass 66 in die Druckluftkammer 67 gefördert. Die Druckluftkammer 67 steht mit der Druckluftaustrittsöffnung 64 des Düsenkopfes 62 in Verbindung. Die in der Druckluftkammer 67 befindliche Druckluft kühlt die Druckluftkammer 67 und somit das Innere des Düsenkörpers 61, einschließlich des Düsenkopfes 62. Eine Befestigungskomponente 69 ist in den Düsenkörper 61 integriert und dient der Befestigung der Düse 60, sodass zumindest der Düsenkopf 62 und ein sich an den Düsenkopf 62 anschließender vorderer Teil des Düsenkörpers 61 in den Abgasstrom des Verbrennungsmotors hineinragen.

Eine Reduktionsmittelleitung 68 ist in dem Düsenkörper 61 angeordnet, erstreckt sich durch diesen und verbindet den Reduktionsmitteleinlass 65 mit der Reduktionsmittelaustrittsöffnung 63 des Düsenkopfes 62. Durch die Reduktionsmittelleitung 68 wird das Reduktionsmittel von der Druckleitung 50 über den Reduktionsmitteleinlass 65 zu einer Einspritzdüse 60 geführt. Die Reduktionsmittelleitung 68 ist starr mit dem Düsenkopf 62 verbunden, im dargestellten Ausführungsbeispiel durch eine Schweißnaht. Die Reduktionsmittelleitung 68 ist gebogen ausgeführt, um zumindest einen Teil einer in der Düse 60 auftretenden thermischen Spannung absorbieren zu können. Die Biegung der Reduktionsmittelleitung 68 ist so dimensioniert, dass die Reduktionsmittelleitung 68 auch bei einer größtmöglichen Biegung den Düsenkörper 61 nicht unmittelbar berührt. Die in der Druckluftkammer 67 befindliche Druckluft umgibt die durch die Druckluftkammer 67 verlaufende Reduktionsmittelleitung 68. Somit wird auch die Reduktionsmittelleitung 68 von der in der Druckluftkammer 67 befindlichen Druckluft gekühlt.

Der Düsenkörper 61 umfasst einen Hitzeschild 70, der die Reduktionsmittelleitung 68 thermisch isoliert und damit eine Wärmeübertragung von dem Abgasstrom zu der Reduktionsmittelleitung 68 über den Düsenkörper 61 reduziert. Der Hitzeschild 70 ist als eine sich der Länge nach entlang des Düsenkörpers 61 erstreckende Komponente ausgebildet.

In einer nicht dargestellten Alternative kann der Hitzeschild auch aus mehreren in den Düsenkörper 61 integrierten Teilkomponenten bestehen.

Der Hitzeschild 70 wird von einer äußeren Wandung 71 und einer inneren Wandung 72 gebildet. Die innere Wandung 72 ist eine tragende Wandung, die starr mit dem Düsenkopf 62 und dem Düsenkörper 61 verbunden ist. Die äußere Wandung 71 ist an einem ersten Ende starr mit dem Düsenkopf 62 verbunden und an einem zweiten Ende frei beweglich gegenüber dem Düsenkörper 61 angeordnet. Bei einer Erwärmung kann sich die äußere Wandung 71 demzufolge ungehindert ausdehnen ohne eine Spannung auf die Reduktionsmittelleitung 68 zu übertragen.

Die äußere Wandung 71 ist in einem Abstand zu der inneren Wandung 72 angeordnet, sodass in dem Hitzeschild 70 zwischen der äußeren Wandung 71 und der inneren Wandung 72 ein Hohlraum 73 gebildet wird, der mit Luft gefüllt ist. Luft weist schlechte Wärmeleitungseigenschaften auf und dient somit als wärmeisolierendes Material.

Die äußere Wandung 71 und die innere Wandung 72 bestehen aus zwei unterschiedlichen metallischen Werkstoffen. Dabei weist der Werkstoff der inneren Wandung 72 in dem dargestellten Ausführungsbeispiel einen geringeren thermischen Ausdehnungskoeffizienten auf, als der Werkstoff der äußeren Wandung 71. Somit dehnt sich die innere Wandung 72, die als tragende Wandung beidseitig starr mit dem Düsenkörper 61 verbunden ist, bei einer Erwärmung weniger aus, als die äußere Wandung 71. Somit kann die von dem Düsenkörper 61, insbesondere der inneren Wandung 72, auf die Reduktionsmittelleitung 68 übertragene thermische Spannung reduziert werden.

Zur Anpassung an die Einbausituation und die Umgebungsbedingungen kann der Abstand zwischen der äußeren Wandung 71 und der inneren Wandung 72 und damit das Volumen des Hohlraumes 73 variiert werden. Ein vergrößerter Abstand zwischen der äußeren Wandung 71 und der inneren Wandung 72 bietet grundsätzlich eine bessere Wärmedämmung, wobei sich bei einem zu großen Volumen des Hohlraums 73 eine erhöhte Konvenktion ausbilden kann. Daher kann der Abstand zwischen der äußeren Wandung 71 und der inneren Wandung 72 so gewählt werden, dass einerseits eine bestmögliche Isolationswirkung bei möglichst geringer Konvektion innerhalb des Hohlraums 73 erreicht wird.

## Patentansprüche

1. Außenmischende Einspritzdüse (60) zur Einspritzung eines Reduktionsmittels in den Abgasstrom eines Verbrennungsmotors zur selektiven katalytischen Reduktion, insbesondere zur Zerstäubung des Reduktionsmittels mittels Druckluft oder Treibgas, wobei die Einspritzdüse (60) einen Düsenkörper (61) und einen Düsenkopf (62) umfasst, wobei eine Reduktionsmittelleitung (68) in dem Düsenkörper (61) angeordnet und mit dem Düsenkopf (62) verbunden ist, wobei der Düsenkörper (62) zumindest einen Hitzeschild (70) aufweist, der die Reduktionsmittelleitung (68) zumindest teilweise thermisch isoliert, wobei die Reduktionsmittelleitung (68) gebogen ist, um zumindest einen Teil einer in der Düse (60) auftretenden thermischen Spannung absorbieren zu können, **dadurch gekennzeichnet, dass** der Düsenkörper (61) im Inneren eine Druckluftkammer (67) bildet, wobei die in der Kammer (67) befindliche Druckluft die durch die Kammer (67) verlaufende Reduktionsmittelleitung (68) umgibt, wobei der Düsenkörper (71) an einem Ende einen Drucklufteinlass (66) und einen Reduktionsmitteleinlass (65) und an einem gegenüberliegenden Ende den Düsenkopf (62) mit zumindest einer Reduktionsmittelaustrittsöffnung (63) und zumindest einer Druckluftaustrittsöffnung (64) aufweist, wobei die Reduktionsmittelleitung (68) den Reduktionsmitteleinlass (65) mit der Reduktionsmittelaustrittsöffnung (63) verbindet und wobei die zumindest eine Druckluftaustrittsöffnung (64) mit der Druckluftkammer (67) in Verbindung steht.

2. Einspritzdüse (60) nach Anspruch 1, **dadurch gekennzeichnet, dass** der Hitzeschild (70) von einer äußeren Wandung (71) und einer inneren Wandung (72) gebildet wird, wobei die innere Wandung (72) eine tragende Wandung ist, die starr mit dem Düsenkopf (62) und dem Düsenkörper (61) verbunden ist und wobei die äußere Wandung (71) an einem ersten Ende starr mit dem Düsenkopf (62) oder dem Düsenkörper (61) verbunden ist und an einem dem ersten Ende gegenüberliegenden zweiten Ende frei beweglich angeordnet ist.

3. Einspritzdüse (60) nach Anspruch 2, **dadurch gekennzeichnet, dass** die äußere Wandung (71) in einem Abstand zu der inneren Wandung (72) angeordnet ist, sodass in dem Hitzeschild (70) zwischen der äußeren Wandung (71) und der inneren Wandung (72) ein Hohlraum (73) gebildet wird, der mit Luft und/oder mit einem wärmeisolierenden Material gefüllt ist.

4. Einspritzdüse (60) nach Anspruch 2 oder 3, **dadurch gekennzeichnet, dass** die äußere Wandung (71) und die innere Wandung (72) aus zwei unterschiedlichen metallischen Werkstoffen bestehen.

5. Einspritzdüse (60) nach Anspruch 4, **dadurch gekennzeichnet, dass** der Werkstoff der inneren Wandung (72) einen geringeren thermischen Ausdehnungskoeffizienten aufweist als der Werkstoff der äußeren Wandung (71).

6. Reduktionsmitteldosiersystem (10) zur Einspritzung eines Reduktionsmittels in den Abgasstrom eines Verbrennungsmotors zur selektiven katalytischen Reduktion, mit zumindest einer Förderpumpe (20), mittels derer Reduktionsmittel aus einem Reduktionsmitteltank (40) über eine Saugleitung (45) aus dem Tank (40) angesaugt, über zumindest eine Druckleitung (50) gefördert und über zumindest eine Düse (60) in den Abgasstrom des Verbrennungsmotors eingeleitet wird, wobei das Dosiersystem (10) eine Druckluftversorgung (30) aufweist und das Reduktionsmittel mittels Druckluft außerhalb der Düse (60) zerstäubt wird, **dadurch gekennzeichnet, dass** die zumindest eine Düse (60) eine außenmischende Einspritzdüse nach einem der vorherigen Ansprüche ist.

## Claims

1. Externally mixing injection nozzle (60) for injecting a reducing agent into the exhaust gas flow of a combustion engine for selective catalytic reduction, in particular for spraying the reducing agent by means of compressed air or propellant, wherein the injection nozzle (60) comprises a nozzle body (61) and a nozzle head (62), wherein a reducing agent line (68) is arranged in the nozzle body (61) and is connected to the nozzle head (62), wherein the nozzle body (62) has at least one heat shield (70) which at least partly insulates the reducing agent line (68), wherein the reducing agent line (68) is curved in order to be able to absorb at least a portion of the thermal pressure within the nozzle (60), **characterised in that** the nozzle body (61) forms a compressed air chamber (67) on the inside, wherein the compressed air located in the chamber (67) surrounds the reducing agent line (68) running through the chamber (67), wherein the nozzle body (71) at one end has a compressed air inlet (66) and a reducing agent inlet (65) and at an opposite end has the nozzle head (62) with at least one reducing agent outlet opening (63) and at least one compressed air outlet opening (64), wherein the reducing agent line (68) connects the reducing agent inlet (65) to the reducing agent outlet opening (63) and wherein the at least one compressed air outlet opening (64) is connected to the compressed air chamber (67).

2. Injection nozzle (60) according to claim 1, **characterised in that** the heat shield (70) is formed by an outer wall (71) and an inner wall (72), wherein the inner wall (72) is a supporting wall which is connected rigidly to the nozzle head (62) and the nozzle body (61) and wherein the outer wall (71) is connected at a first end rigidly to the nozzle head (62) or the nozzle body (61) and is arranged to be freely movable at a second end opposite the first end.

3. Injection nozzle (60) according to claim 2, **characterised in that** the outer wall (71) is arranged at a distance from the inner wall (72) so that in the heat shield (70) between the outer wall (71) and the inner wall (72) a cavity (73) is formed which is filled with air and/or with a heat-insulating material.

4. Injection nozzle (60) according to claim 2 or 3, **characterised in that** the outer wall (71) and the inner wall (72) are made from two different metal materials.

5. Injection nozzle (60) according to claim 4, **characterised in that** the material of the inner wall (72) has a lower thermal expansion coefficient than the material of the outer wall (71).

6. Reducing agent dosage system (10) for injecting a reducing agent into the exhaust gas flow of a combustion engine for selective catalytic reduction with at least one feed pump (20), by means of which reducing agent is suctioned from a reducing agent tank (40) via a suction line (45) out of the tank (40), conveyed via at least one pressure line (50) and is introduced via at least one nozzle (60) into the exhaust gas flow of the combustion engine, wherein the dosage system (10) has a compressed air supply (30) and the reducing agent is sprayed by means of compressed air outside the nozzle (60), **characterised in that** the at least one nozzle (60) is an externally mixing injection nozzle according to any of the preceding claims.

## Revendications

1. Injecteur (60) à mélange extérieur, pour l'injection d'un agent réducteur dans le flux de gaz d'échappement d'un moteur à combustion interne en vue de la réduction catalytique sélective, en particulier pour la pulvérisation de l'agent réducteur au moyen d'air comprimé ou de gaz propulseur, dans lequel l'injecteur (60) comprend un corps de buse (61) et une tête de buse (62), dans lequel une conduite d'agent réducteur (68) est agencée dans le corps de buse (61) et est reliée à la tête de buse (62), dans lequel le corps de buse (62) comporte au moins un écran thermique (70) qui isole thermiquement la conduite d'agent réducteur (68) au moins en partie, dans lequel la conduite d'agent réducteur (68) est courbée pour pouvoir absorber au moins une partie d'une tension thermique apparaissant dans l'injecteur (60), **caractérisé en ce que** le corps de buse (61) forme à l'intérieur une chambre d'air comprimé (67), dans lequel l'air comprimé se trouvant dans la chambre (67) entoure la conduite d'agent réducteur (68) s'étendant à travers la chambre (67), dans lequel le corps de buse (71) comporte à une extrémité une entrée d'air comprimé (66) et une entrée d'agent réducteur (65) et à une extrémité opposée la tête de buse (62) avec au moins un orifice de sortie d'agent réducteur (63) et au moins un orifice de sortie d'air comprimé (64), dans lequel la conduite d'agent réducteur (68) relie l'entrée d'agent réducteur (65) à l'orifice de sortie d'agent réducteur (63) et dans lequel l'au moins un orifice de sortie d'air comprimé (64) est en liaison avec la chambre d'air comprimé (67).

2. Injecteur (60) selon la revendication 1, **caractérisé en ce que** l'écran thermique (70) est formé par une paroi externe (71) et une paroi interne (72), dans lequel la paroi interne (72) est une paroi porteuse qui est assemblée de manière rigide à la tête de buse (62) et au corps de buse (61) et dans lequel la paroi externe (71) est assemblée de manière rigide au niveau d'une première extrémité à la tête de buse (62) ou au corps de buse (61) et est agencée de manière librement mobile au niveau d'une deuxième extrémité à l'opposé de la première extrémité.

3. Injecteur (60) selon la revendication 2, **caractérisé en ce que** la paroi externe (71) est agencée à une certaine distance de la paroi interne (72) de telle sorte qu'un espace creux (73) qui est rempli d'air et/ou d'un matériau thermiquement isolant est formé dans l'écran thermique (70) entre la paroi externe (71) et la paroi interne (72).

4. Injecteur (60) selon la revendication 2 ou 3, **caractérisé en ce que** la paroi externe (71) et la paroi interne (72) sont constituées de deux matériaux métalliques différents.

5. Injecteur (60) selon la revendication 4, **caractérisé en ce que** le matériau de la paroi interne (72) présente un plus petit coefficient de dilatation thermique que le matériau de la paroi externe (71).

6. Système de dosage d'agent réducteur (10) pour l'injection d'un agent réducteur dans le flux de gaz d'échappement d'un moteur à combustion interne en vue de la réduction catalytique sélective, avec au moins une pompe de circulation (20) au moyen de laquelle de l'agent réducteur est aspiré à partir d'un réservoir d'agent réducteur (40) par l'intermédiaire d'une conduite d'aspiration (45) hors du réservoir (40), est transporté par l'intermédiaire d'au moins une conduite sous pression (50) et est introduit par l'intermédiaire d'au moins un injecteur (60) dans le flux de gaz d'échappement du moteur à combustion interne, dans lequel le système de dosage (10) comporte une alimentation en air comprimé (30) et l'agent réducteur est pulvérisé au moyen d'air comprimé en dehors de la buse (60), **caractérisé en ce que** l'au moins un injecteur (60) est un injecteur à mélange extérieur selon l'une quelconque des revendications précédentes.
